# EUROPÄISCHE PATENTSCHRIFT

(11) **EP 3 129 644 B1**
(45) Veröffentlichungstag und Bekanntmachung des Hinweises auf die Patenterteilung: **25.11.2020**
(21) Anmeldenummer: 15713754.8
(22) Anmeldetag: 31.03.2015
(51) Int. Cl.: F03D 1/06

(54) **ROTORBLATT EINER WINDENERGIEANLAGE**
ROTOR BLADE FOR A WIND TURBINE
PALE DE ROTOR D'UNE ÉOLIENNE

(30) Priorität: 07.04.2014 DE 102014206670; 09.04.2014 DE 102014206887
(43) Veröffentlichungstag der Anmeldung: 15.02.2017
(73) Patentinhaber: Wobben Properties GmbH, 26607 Aurich (DE)
(72) Erfinder: HOFFMANN, Alexander, 26721 Emden (DE)
(74) Vertreter: Eisenführ Speiser
(86) Internationale Anmeldenummer: PCT/EP2015/057116
(87) Internationale Veröffentlichungsnummer: WO 2015/155079

(56) Entgegenhaltungen:
- WO-A1-2013/075718
- WO-A1-2013/083451
- WO-A2-2010/086297
- DE-A1-102011 088 025
- DE-C- 943 880
- ES-A1- 2 333 499
- FR-A- 1 187 166

## Beschreibung

Die vorliegende Erfindung betrifft ein Rotorblatt einer Windenergieanlage sowie eine Windenergieanlage mit einem solchen Rotorblatt. Außerdem betrifft die vorliegende Erfindung ein Verfahren zum Herstellen eines Rotorblattes einer Windenergieanlage.

Windenergieanlagen sind bekannt und der derzeit gängigste Typ einer Windenergieanlage ist eine sog. Horizontalachsenwindenergieanlage, üblicherweise mit drei Rotorblättern. Solche Windenergieanlagen weisen zunehmend eine größere Bauform auf, nämlich insbesondere höhere Naben- oder Achshöhe und größeren Rotordurchmesser mit entsprechend größerem Generator und größerer Einspeiseleistung. Größere Rotordurchmesser bedeuten längere Rotorblätter, die von ihrer Fertigungsstätte zum jeweiligen Aufbauort transportiert und dort installiert werden müssen. Besonders der Transport solcher langen Rotorblätter, die schon heute Längen von etwa 60 Metern aufweisen können, macht regelmäßig die Verwendung geteilter Rotorblätter erforderlich.

Solche geteilten Rotorblätter, die also in Längsachse wenigstens zwei Teile aufweisen, sind bekannt. Bspw. verwendet eine Windenergieanlage von ENERCON vom Typ E-126 ein Rotorblatt mit einem nabennahen Stahlteil und einen nabenfernen GFK-Teil. Die Konstruktion zeigt bspw. das Dokument US 8,192,170.

Durch die Verwendung geteilter Rotorblätter kann der Transport erleichtert werden. Darüber hinaus besteht vermehrt der Wunsch, Rotorblätter möglichst leicht und schlank zu bauen, um dadurch Kosten zu sparen, nämlich nicht nur Kosten für das Blatt, sondern auch Kosten für die nachfolgenden Tragstrukturen der Windenergieanlage und im Übrigen auch Kosten für die Errichtung der Windenergieanlage. In diesem Sinne werden Rotorblätter heutzutage zunehmend optimiert, wobei natürlich auch eine besonders gute Aerodynamik wichtig ist und bei der Konstruktion eines Rotorblatts berücksichtigt werden muss.

Eine Variante eines zusammengesetzten Rotorblatts aus einem nabennahen und einem nabenfernen Teil, wobei beide Teile im Wesentlichen aus GFK gefertigt sind, zeigt das Dokument WO2013/083451. Dieses Beispiel zeigt eine sehr effiziente Lösung der Verbindung beider Rotorblattteile. Viele Verbindungsbolzen sind in einer umlaufenden Reihe in dem Rotorblatt angeordnet, können dort erreicht und insbesondere festgezogen werden und schaffen sogar durch eine Vorspannung eine Ermüdungsprävention. Diese Lösung sieht dafür einen besonders kräftigen umlaufenden Bereich an der Verbindungsstelle der beiden Rotorblattteile vor, in dem diese Verbindung und Verschraubung mittels der genannten Bolzen durchgeführt wird. Dieser gezeigte Verbindungsbereich, der die vielen Bolzen aufnimmt, muss entsprechend die gesamte Last des äußeren, also nabenfernen Blattteils aufnehmen. Sowohl der entsprechende Verbindungsbereich am nabennahen Rotorblattteil, als auch der entsprechende Verbindungsbereich am nabenfernen Teil des Rotorblatts müssen praktisch diese Kräfte vollständig und zuverlässig aufnehmen. Entsprechend muss auch die entstehende Kraft bzw. Belastung von diesen Verbindungsbereichen in das jeweilige Teil, also nabennahe bzw. nabenferne Teil des Rotorblatts eingeleitet werden. Die einzuleitenden Belastungen können erheblich sein, was mitunter auch ein Haltbarkeitsrisiko, zumindest eine potentielle Schwachstelle sein kann.

Ferner sind aus WO 2010/086297 A2, DE 10 2011 088 025 A1, WO 2013/075718 A1, ES 2 333 499 A1, DE 943 880 C und FR 1 187 166 A jeweils mehrteilige Rotorblätter mit einem Blattinnenteil und einem Blattaußenteil bekannt. Das Blattinnenteil und das Blattaußenteil sind über einen Verbindungsbereich miteinander verbunden, indem eine Verdickung ausgebildet ist.

Das Deutsche Patent- und Markenamt hat in der Prioritätsanmeldung zu vorliegender Anmeldung folgenden Stand der Technik recherchiert: US 2011/0293432 A1, WO 01/42647 A2, WO 2006/ 002 621 A1, WO 2006/ 056 584 A1.

WO 2013/083451 A1 zeigt ein Rotorblatt bestehend aus einem Rotorblattinnenteil und einem Rotorblattaußenteil, welche miteinander verbunden sind. Im Verbindungsbereich der Blattteile werden Verbindungsvorrichtungen, jeweils umfassend einen äußeren und einen inneren Verbindungsbolzen, zum Verbinden der Rotorblattteile eingesetzt.

Der vorliegenden Erfindung liegt somit die Aufgabe zugrunde, zumindest eines der genannten Probleme zu adressieren. Insbesondere soll eine Lösung vorgeschlagen werden, bei der eine zuverlässige Verbindung und gleichzeitig ein gutes aerodynamisches Verhalten realisiert wird. Zumindest soll gegenüber bekannten Lösungen eine alternative Lösung vorgeschlagen werden.

Erfindungsgemäß wird ein Rotorblatt gemäß Anspruch 1 vorgeschlagen. Dieses Rotorblatt weist eine Blattwurzel zur Befestigung an einer Rotornabe sowie Blattspitze auf. Die Blattspitze ist an dem Rotorblatt zur Rotornabe abgewandte Seite, also bezogen auf den Rotor radial außen. Von der Blattwurzel zur Blattspitze verläuft eine Rotorblattlängsachse.

Das Rotorblatt ist geteilt und weist ein Rotorblattinnenteil und ein Rotorblattaußenteil auf. Das Rotorblattinnenteil ist zur Blattnabe gewandt, kann also als nabennahes Blattteil bezeichnet werden, und umfasst insbesondere die Blattwurzel. Entsprechend ist das Rotorblattaußenteil zur Blattnabe abgewandt, kann also als nabenfernes Blattteil bezeichnet werden, und es umfasst insbesondere die Blattspitze. Die Bezeichnung innen bzw. außen bezieht sich hier auf den Rotor und auf eine radiale Richtung. Innen, also radial innen ist zur Drehachse hin und außen bzw. radial außen ist von der Drehachse ausgesehen außen. Vorzugsweise ist das Rotorblatt in Längsrichtung gesehen nur aus zwei Teilen zusammengesetzt, nämlich dem Rotorblattinnenteil, das dann die Rotorblattwurzel aufweist, und den Rotorblattaußenteil, das dann die Rotorblattspitze aufweist. Alternativ kann aber bspw. auch die Rotorblattspitze ein separates Teil bilden, worauf es hier nicht ankommt. Ebenfalls können, was weiter unten auch noch erläutert wird, weitere Elemente an dem Rotorblatt vorhanden sein bzw. das Rotorblatt in weitere Elemente unterteilt sein, die vorzugsweise aber nicht eine weitere Unterteilung in Längsrichtung betreffen.

Es wird nun vorgeschlagen, dass das Rotorblattinnenteil und das Rotorblattaußenteil in einem Verbindungsbereich miteinander verbunden sind und der Verbindungsbereich in dem Rotorblatt eine Verdickung bildet. Die Oberfläche des Rotorblatts ist nun also von der Blattwurzel zur Blattspitze nicht vollständig durchgehend eine annähernd gerade allenfalls leicht gebogene Oberfläche, sondern weist in dem Verbindungsbereich eine deutliche Verdickung auf. Diese Verdickung ist im Wesentlichen als eine Art ganz oder teilweise umlaufender Steg oder Wall ausgebildet.

Vorzugsweise verläuft er eben entlang des Verbindungsbereichs und damit quer zur Rotorblattlängsachse. Zumindest verläuft er von der Druckseite zur Saugseite bzw. umgekehrt, nämlich über die Rotorblattvorderkante. Die Rotorblatthinterkante ist üblicherweise, jedenfalls im Vergleich zur Rotorblattvorderkante, recht scharfkantig ausgebildet und dort kann zwar die Verdickung hinreichen, läuft aber nicht um diese Kante herum, jedenfalls nichts vorzugsweise. Diese Verdickung und dieser umlaufende oder teilweise umlaufende Steg kann einen angeschrägten Bereich aufweisen, so dass er über diesen schrägen Bereich zur restlichen Rotorblattoberfläche der entsprechenden Seite übergeht. Bspw. verläuft also die Oberfläche des Rotorblatts von der Blattwurzel kommend und radial nach außen gehend zunächst flach oder allenfalls leicht gebogen, trifft dann auf diesen angeschrägten Bereich und erhebt sich entsprechend bis zum dicksten oder höchsten Bereich der Verdickung, der ebenfalls eine gewisse Breite, wie bspw. 10 bis 30cm oder ähnlich aufweisen kann. Dann verläuft die Oberfläche wieder die Schräge herunter zur im Grunde nicht mehr verdickten Blattoberfläche und verläuft von da aus im Grund in gewohnter Weise bis zur Rotorblattspitze.

Durch diese Verdickung ist es nun möglich, eine stabile Verbindung zwischen den beiden Blattteilen, also dem Rotorblattinnenteil und dem Rotorblattaußenteil herzustellen. Es hat sich gezeigt, dass diese Lösung sehr gute aerodynamische Eigenschaften aufweist. Die Verdickung verläuft nämlich parallel zu erwartenden Luftströmungen im Betrieb des Rotorblatts. Dadurch, dass diese Verdickung parallel zu diesen Luftströmungen angeordnet ist, beeinflusst sie nicht nur die Aerodynamik und diese Luftströmungen nicht negativ, sondern hat sogar einen positiven Effekt. Es kann nämlich dadurch unterstützt werden, dass die Luftströmungen oder etwaige Wirbel nicht an dem Rotorblatt entlang driftet, also von der Rotorblattnabe zur Rotorblattspitze bzw. umgekehrt. Stattdessen wird eine möglichst laminare, zueinander parallele Strömung unterstützt.

Gleichzeitig wurde auch erkannt, dass diese Verdickung vorteilhaft ist, obwohl der generelle Wunsch besteht, Rotorblätter möglichst schlank auszubilden. Die Verdickung verändert aber die Aerodynamik nicht und kann wie beschrieben vielmehr im Sinne eines Grenzzauns wirken. Außerdem wäre zwar ein Rotorblatt, das insgesamt die Ausmaße im Bereich der Verdickung aufweisen würde, zu schwer, zumindest unerwünscht schwer, aber in diesem Verbindungsbereich spielt das Gewicht keine Rolle. Das liegt nicht nur darin, dass der Bereich bezogen auf die Gesamtlänge des Rotorblatts klein ist, sondern auch daran, dass durch die Verdickung und damit Verlagerung der Befestigung zwischen diesen beiden Blattteilen nach außen bessere Hebelverhältnisse bei der Befestigung schafft und dadurch sogar mit weniger zumindest vergleichsweise wenig Material auskommen kann.

Schließlich wurde auch erkannt, dass in dieser Verdickung ein Teil der Befestigung erfolgen kann, ohne dass dadurch eine Zugänglichkeit von außen nötig wäre. Diese Verdickung nach außen ist also hilfreich, obwohl die Befestigung, insbesondere Verschraubung, innen erfolgt. Zur Befestigung der Rotorblattteile untereinander werden eine äußere und eine innere Reihe Gewindestangen vorgesehen. Hierbei bezieht sich die Bezeichnung äußere und innere auf das Rotorblatt, so dass also die äußere Reihe im Grunde unmittelbar unter der Blattoberfläche umläuft, wohingegen die innere Reihe innerhalb dieser äußeren Reihe umläuft, also näher zu einer Rotorblattmittelachse hin. Dadurch kann eine gute Befestigung der beiden Blattteile untereinander erreicht werden. Außerdem können die auftretenden Kräfte durch diese doppelreihige Ausführung besser gestreut werden.

Vorzugsweise erfolgt das Verbinden zwischen Rotorblattinnenteil und Rotorblattaußenteil im Verbindungsbereich durch Verschrauben und/oder Verbolzen.

Hierdurch kann eine feste Verbindung erreicht und ggf. auch in Wartungsintervallen nachgezogen werden.

Vorzugsweise erhebt sich die Verdickung um wenigstens 1cm, insbesondere um wenigstens 2cm, über die Blattoberfläche. Außerdem oder alternativ bildet die Verdickung eine Verdickung des Rotorblatts um wenigstens ein Prozent, insbesondere um wenigstens zwei Prozent bezogen auf die Profiltiefe oder Sehnenlänge im Verbindungsbereich.

Außerdem oder alternativ hat eine solche ganze oder teilweise umlaufende Verdickung eine im Wesentlichen konstante Breite von 100 bis 200cm, insbesondere etwa 1,5m. Hierdurch kann die gewünschte Stabilität und gleichzeitig ein grenzzaunähnlicher Effekt erreicht werden.

Eine Ausführungsform schlägt vor, dass sich das Rotorblattaußenteil aus einem äußeren Kern und äußerem Hinterkantenkasten zusammensetzt und dass sich entsprechend das Rotorblattinnenteil aus einem inneren Kern und innerem Hinterkantenkasten zusammensetzt. Auch hier beziehen sich die Begriffe äußeren bzw. inneren auf die radiale Richtung des Rotors, also die Richtung von der Drehachse nach außen bzw. nach innen zur Drehachse hin. Das Rotorblattaußenteil und das Rotorblattinnenteil werden im Bereich des äußeren und inneren Kerns zusammengesetzt. Dort werden also die Verbindungsmittel wie Schrauben oder Bolzen oder dergleichen vorgesehen. Der äußere bzw. innere Hinterkantenkasten werden dann jeweils nur an ihren entsprechenden äußeren bzw. inneren Kern angebracht. Eine Befestigung des äußeren und inneren Hinterkantenkastens untereinander findet also nicht bzw. nicht wesentlich statt.

Entsprechend weist das Rotorblatt und entsprechend das Rotorblattaußenteil und das Rotorblattinnenteil die Verdickung im Bereich des äußeren und inneren Kerns auf, nämlich dort, wo sie zusammengesetzt sind. Vorzugsweise verläuft die Verdickung aber außerdem zumindest teilweise von dem äußeren bzw. inneren Kern zum äußeren bzw. inneren Hinterkantenkasten, um dadurch die Aerodynamik positiv zu beeinflussen.

Der innere und der äußere Kern können jeweils als gewickelter Kern ausgebildet sein und/oder im Querschnitt eine ovale Form aufweisen. Das Vorsehen eines gewickelten Kerns bedeutet, dass der Kern aus gewickelten Lagen hergestellt wird, insbesondere dass Fasermaterialien, insbesondere Fasermatten aus Glasfasern oder Kohlefasern, zum Herstellen des Kerns gewickelt werden, um dadurch einen Kern aus faserverstärktem Kunststoff herzustellen. Dadurch kann ein besonders stabiler Kern hergestellt werden. Eine ovale Form kann die auftretenden Kräfte berücksichtigen, und an das herzustellende Rotorblatt gut angepasst werden. Durch die ovale Form ist auch für eine nicht kreisförmige Form eine Herstellung durch Wickeln möglich und eine vorteilhafte Kraftverteilung kann erreicht werden. Die ovale Form sollte dennoch nicht zu dünn gewählt werden, um eine gute Stabilität ins mehrere Richtungen gewährleisten zu können. Dazu wird ein Verhältnis vom kleinsten zum größten Durchmesser des Ovals von 1:1,2 bis 1:2 vorgeschlagen, insbesondere von 1:1,4 bis 1:1,7, insbesondere ein Verhältnis von etwa 1:1,5. Im Übrigen bezeichnet hier ein Querschnitt einen Querschnitt quer zur Rotorblattlängsachse.

Vorzugsweise sind in dem Bereich der Verdickung Befestigungsmittel einlaminiert. Insbesondere werden Öffnungen, Durchlässe und Verankerungen oder Aufnahmen für Verankerungen bereits bei der Herstellung diese Elemente fest vorgesehen und mit einlaminiert. Bspw. können eine Vielzahl von Verankerungselementen, insbesondere in einer umlaufenden Art und Weise in den Rotorblattaußenteil im Verbindungsbereich einlaminiert sein. Außerdem oder alternativ können im Rotorblattinnenteil im Verbindungsbereich Aufnahmen und Durchführungen für Schrauben oder Gewindebolzen zum Verbinden mit den Verankerungselementen vorgesehen sein. Auch gleichmäßige Kanten, Anlageflächen oder dergleichen zur Aufnahme von Befestigungs- oder Verbindungsspannungen können im Rotorblattinnenteil vorgesehen sein, um nur einige Beispiele zu nennen. Ebenfalls können auch die Funktionalität zwischen Rotorblattaußenteil und Rotorblattinnenteil getauscht sein, so dass also die Verankerungen im Rotorblattinnenteil und die genannten Durchführungen oder Abstützkanten im Rotorblattaußenteil angeordnet sein können. Alternativ können aber gerade solche Durchführungen, nämlich Bohrungen und Aufnahmen von Verankerungselementen nachträglich eingebracht, insbesondere eingebohrt werden. Eine saubere Ansatzkante, Bohrungen, Langlöcher oder ähnliches können auch im Nachhinein eingefräst werden.

Entsprechend wird als wesentliches Material für das Rotorblattaußenteil und das Rotorblattinnenteil ein faserverstärkter Kunststoff vorgesehen, insbesondere GFK oder CFK. Natürlich können diese beiden Rotorteile noch andere Materialen aufweisen, aber das wesentliche Material, insbesondere profilgebende Material, insbesondere die profilgebende und zu einem Großteil Stabilität gebende Außenhülle ist aus diesem Material gefertigt. Die Elemente, die in dem Verbindungsbereich zum Verbinden benötigt werden, wie Verankerungen, Stifte und Bolzen, können aber aus anderem Material gefertigt sein, insbesondere aus Stahl oder anderem Eisen.

Vorzugsweise bilden jeweils eine Gewindestange der inneren Reihe und eine der äußeren Reihe zusammen ein Gewindestangenpaar, die wiederum Teil eines Befestigungspaares sind. Ein solches Gewindestangenpaar weist außerdem einen gemeinsamen quer zu den Gewindestangen verlaufenden inneren in dem Rotorblattinnenteil verankerten Verankerungsstift auf und einen gemeinsamen ebenfalls quer zu den Gewindestangen verlaufenden äußeren Verankerungsstift. Hierbei bezieht sich der Begriff äußere oder innere auf die Rotorblattteile, so dass also der innere Verankerungsstift in dem Rotorblattinnenteil verankert, nämlich eingesetzt ist und der äußere Verankerungsstift entsprechend in dem äußeren Rotorblattteil verankert, also eingesetzt ist. Diese Verankerungsstifte weisen dabei im Wesentlichen von einer Rotorblattmittelachse aus gesehen radial nach außen zur Rotorblattoberfläche.

Es kann also hiermit durch zwei Verankerungsstifte, die von zwei Gewindestangen verwendet werden, eine entsprechende Verbindungskraft zwischen den beiden Rotorblattteilen wirken. Im Grunde verlaufen die beiden Gewindestangen nebeneinander durch diese beiden Verankerungsstifte und die Verankerungsstifte weisen eine entsprechende Länge und Dicke auf, um die Gewindestangen aufnehmen zu können um von ihnen ihre Kraft aufnehmen und in das Blatt übertragen zu können.

Gemäß einer vorteilhaften Ausführungsform ist einer der beiden Verankerungsstifte in einer Bohrung im Grunde fest eingesetzt, die Bohrung ist also auf seine Größe, insbesondere seinem Durchmesser angepasst, wobei der andere Befestigungsstift einer gestreckten Öffnung angeordnet ist, die insbesondere in einer Draufsicht einem Langloch ähnelt bzw. ein solches ist. Im Bereich dieses Stiftes, der in der gestreckten Öffnung angeordnet ist, können Verspannmittel für die Gewindestangen vorgesehen sein, so dass die Gewindestangen hierüber gespannt werden können.

Vorzugsweise ist die äußere Gewindestangenreihe, ggf. eine einzelne Gewindestangenreihe, in dem Bereich unter der Verdickung angeordnet, so dass die Verdickung diese Gewindestangenreihe abdeckt, insbesondere so, dass diese Gewindestangenreihe ohne diese Verdickung außerhalb des Rotorblatts läge, zumindest die Rotorblattoberfläche berühren oder überragen würde.

Es kann somit eine sehr gute Verbindung der beiden Rotorblattteile erreicht werden, wobei gleichzeitig vorteilhafte aerodynamische Eigenschaften entstehen können.

Erfindungsgemäß wird vorgeschlagen, dass die Gewindestangen, insbesondere alle oder zumindest alle der äußeren Reihe, eine geringe Neigung gegenüber der äußeren Blattoberfläche aufweist. Eine solche geringe Neigung meint einen Bereich der insbesondere von 0,5 Grad bis 5 Grad reicht, insbesondere etwa ein 1 Grad beträgt. Hierdurch können die Gewindestangen und damit insbesondere Befestigungspaare vorteilhaft so angeordnet werden, dass die Kraftrichtung besonders günstig ist und besonders günstig in die Blattteile eingeleitet werden kann und auch, dass eine Zugänglichkeit der Verspannmittel verbessert werden kann.

Vorzugsweise sind viele Befestigungspaare vorgesehen und solche weisen einen inneren Verankerungsstift, einen äußeren Verankerungsstift und zwei Gewindestangen auf, die mit jeweils einer Dehnhülse und einem Spannmittel versehen sind. Das Spannmittel kann insbesondere eine Spannmutter sein, wobei die beiden Verankerungsstifte vorzugsweise zwischen den Dehnhülse einerseits und den Spannmitteln andererseits angeordnet sind. Der Aufbau ist dann also so, dass zunächst für jede Gewindestange eine Spannhülse vorgesehen ist und sich daran einer der beiden Befestigungsstifte anschließt. Die Gewindestange reicht dann von dem einen Rotorblattteil, dass das äußere oder innere sein kann, zu dem anderen Rotorblattteil, in dem dann der andere Verankerungsstift vorgesehen ist, durch den die Gewindestange reicht. Schließlich ist zum Abschluss ein Spannmittel auf der Gewindestange angeordnet, insbesondere eine Spannmutter, die dort gegen den Verankerungsstift geschraubt werden kann, um dadurch die beiden Verankerungsstifte gegeneinander zu ziehen und dabei auch die Dehnhülse vorzuspannen. Es kann somit erreicht werden, dass das Spannmittel unmittelbar an der Gewindestange und einem Verankerungsstift angreift und dennoch eine Dehnhülse vorgesehen ist und die Vorspannung halten kann.

Gemäß einer Ausführungsform ist das Rotorblatt so konstruiert, dass die Gewindestange, also insbesondere jede Gewindestange im zusammengesetzten Zustand des Rotorblatts nicht entnommen, aber gespannt werden kann. Insbesondere ist die Gewindestange wenigstens 40cm lang, vorzugsweise etwa 80cm lang. Hierdurch kann ein entsprechender Abstand zwischen den beiden Verankerungsbolzen jedes Befestigungspaares erreicht werden, so dass viel Fleisch im Rotorblatt verbleibt, um die nötigen Kräfte aufzunehmen. Außerdem ist bei einer langen Gewindestange auch das Vorsehen einer entsprechend langen Dehnhülse möglich. Es hat sich herausgestellt, dass das Entnehmen solcher Gewindestangen nach der Montage nicht mehr nötig ist und vielmehr sogar ein Verlust von Gewindestangen vermieden werden kann.

Eine Verbindung der beiden Blattteile, also des Rotorblattinnenteils und des Rotorblattaußenteils erfolgt dann so, dass ein Teil des Befestigungspaares, insbesondere jeweils ein Verankerungsstift mit zwei Gewindestangen und zwei Dehnhülsen bereits in einen der beiden Blattteile, also bspw. dem Rotorblattaußenteil vorgesehen, insbesondere vormontiert sein können. Dadurch dass bereits die Gewindestange jeweils in einer Dehnhülse und außerdem einem Verankerungsstift sitzt, weist sie eine recht klar definierte Position und Ausrichtung auf. Eine Vorinstallation ist somit gut möglich.

Mit dieser Vorinstallation können nun die beiden Rotorblattteile zusammengesetzt werden, so dass die beiden Gewindestangen jedes Befestigungspaares jeweils in eine längliche, einem Langloch ähnelnde Öffnung oder Ausnehmung ragt. Dort kann nun nacheinander zunächst der andere Befestigungsstift aufgesetzt und anschließend die Spannmittel, insbesondere Spannmuttern, angeordnet und schließlich auch verspannt werden. Außerdem wird ein Befestigungspaar vorgeschlagen, wie bereits oben im Zusammenhang mit dem zweigeteilten Rotorblatt in wenigstens einer Ausführungsform erläutert wurde.

Außerdem wird eine Windenergieanlage vorgeschlagen, die wenigstens ein Rotorblatt gemäß einem der vorstehend beschriebenen Ausführungsformen aufweist. Die Windenergieanlage kann somit von den Vorzügen dieser Rotorblätter profitieren und vergleichsweise kostengünstig aufgestellt werden, indem die Rotorblätter zweigeteilt angeliefert werden.

Außerdem wird ein Verfahren zum Herstellen eines Rotorblatts einer Windenergieanlage gemäß Anspruch 12 vorgeschlagen. Dieses Verfahren umfasst zumindest den Schritt Herstellen eines Rotorblattinnenteils und Herstellen eines Rotorblattaußenteils, einschließlich eines Verbindungsbereichs mit einer Verdickung, und das Verfahren umfasst den Schritt Verbinden des Rotorblattinnenteils mit dem Rotorblattaußenteil an einem Errichtungsort einer Windenergieanlage. Hier kann also die Erfindung vorteilhaft zum Herstellen eines Rotorblatts und im Ergebnis Aufbauen einer Windenergieanlage eingesetzt werden.

Beim Herstellen kann eine Sperrplatte oder Sperrscheibe in dem Verbindungsbereich zwischen Rotorblattaußenteil und Rotorblattinnenteil vorgesehen sein, zu der also die Rotorblattlängsachse im Wesentlichen senkrecht verläuft. Diese Sperrplatte oder Sperrscheibe wird dabei vorzugsweise so dimensioniert, dass sie noch über die Verdickung im Sinne eines Grenzzauns hinausragt. Es kann somit auf einfache Art und Weise ein Grenzzaun vorgesehen werden.

Außerdem wird ein Verfahren zum Herstellen eines Rotorblatts einer Windenergieanlage vorgeschlagen, wobei insbesondere ein Rotorblatt hergestellt wird, wie in wenigstens einem der vorstehenden Ausführungsformen beschrieben wurde. Es wird entsprechend auch vorgeschlagen, dabei vor dem Zusammensetzen des Rotorblattinnenteils mit dem Rotorblattaußenteil Gewindestangen zum Verbinden in eines der beiden Rotorblattteile einzusetzen, insbesondere zusammen mit jeweils einer Dehnhülse insoweit einzusetzen bzw. vorzumontieren.

Die Erfindung wird nun nachfolgend anhand von Ausführungsbeispielen exemplarisch unter Bezugnahme auf die begleitenden Figuren näher erläutert.
- Figur 1: zeigt eine Windenergieanlage in einer perspektivischen Ansicht.
- Figur 2: zeigt einen Ausschnitt eines Verbindungsbereichs eines Rotorblatts in dem ein Rotorblattaußenteil und ein Rotorblattinnenteil miteinander verbunden sind.
- Figur 3: zeigt einen perspektivischen Ausschnitt des Verbindungsbereichs gemäß Figur 2.
- Figur 4: zeigt ebenfalls einen Ausschnitt eines Verbindungsbereichs gemäß Figur 2 in einer anderen Ansicht.
- Figur 5: zeigt in einer perspektivischen Ansicht einen Ausschnitt eines inneren Kerns zusammengesetzt mit einem äußeren Kern.
- Figur 6: zeigt in einer perspektivischen Ansicht ein Rotorblattinnenteil.
- Figur 7: zeigt in einer perspektivischen Ansicht ein Rotorblattaußenteil.
- Figur 8: zeigt einen Verbindungsbereich eines inneren Kerns eines Rotorblattinnenteils in einer perspektivischen Ansicht.
- Figur 9: zeigt einen Ausschnitt eines Rotorblattaußenteils in einer perspektivischen Ansicht.

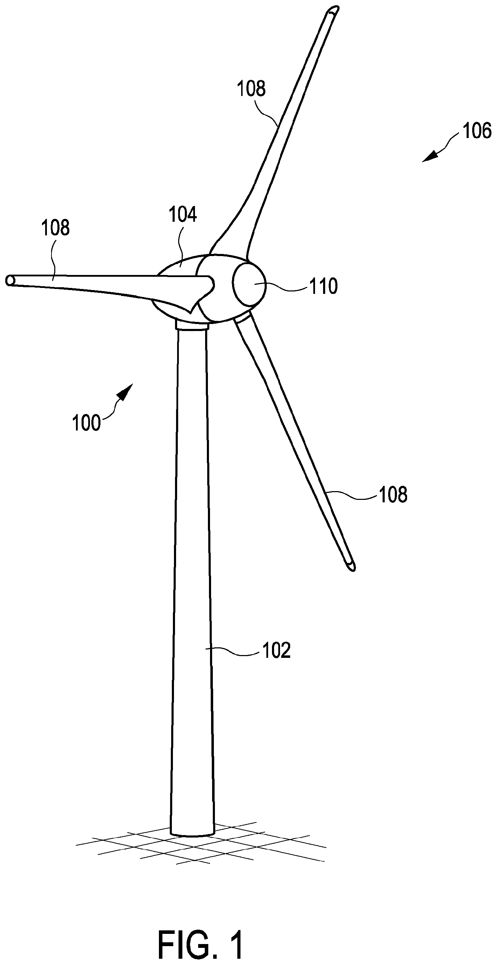

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

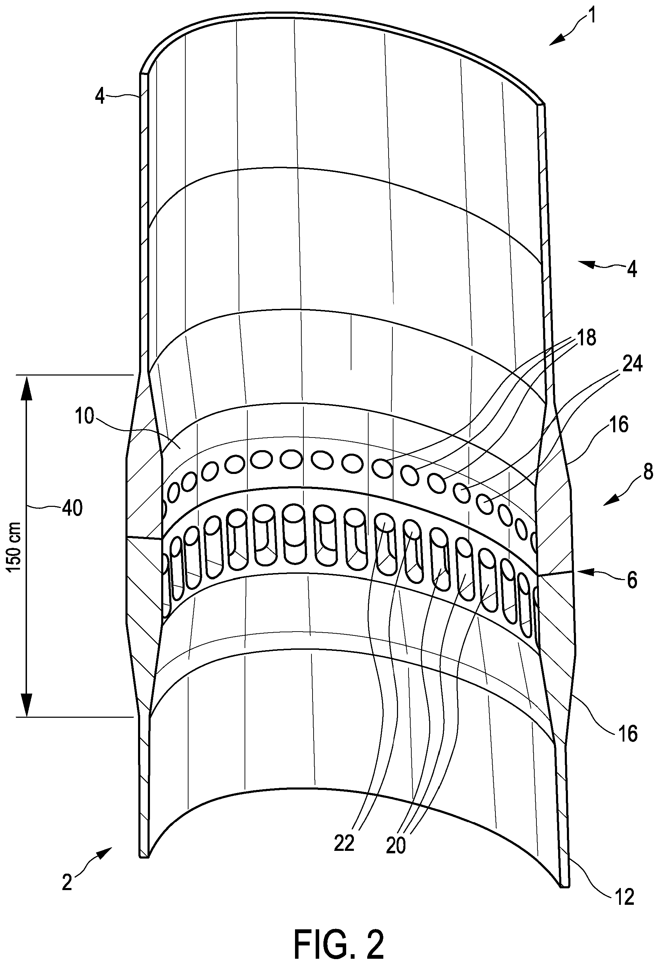

Figur 2 zeigt einen Ausschnitt eines Rotorblatts 1 mit einem Rotorblattinnenteil 2 und einem Rotorblattaußenteil 4. Die Darstellung zeigt auch eine Einteilung des gezeigten Abschnitts des Rotorblatts 1 in viele etwa rechteckige Felder, was der rechnerischen Zerlegung in Bereiche gleicher Materialkoordinatensysteme dient, hier aber im weiteren Detail nicht erläutert zu werden braucht.

Davon abgesehen sind das Rotorblattinnenteil 2 und das Rotorblattaußenteil 4, die auch vereinfachend als Innenblatt 2 bzw. Außenblatt 4 bezeichnet werden können, im Bereich einer Trennstelle 6 miteinander verbunden. In diesem Bereich könnte auch eine Trennscheibe oder ähnliches als Grenzschichtzaun angeordnet werden.

Die Figur 2 zeigt im Bereich im der Trennstelle eine Verdickung 8, bei der die Blattwandung 12 des Innenblatts 2 bzw. 14 des Außenblatts 4 von dieser Verdickung 8 weit überragt wird. Diese Verdickung 8 bildet insoweit einen umlaufenden Steg oder Wall, der zu beiden Seiten abgeschrägte Bereiche 16 aufweist.

Korrespondierend dazu ist auch eine Verdickung 10 nach innen vorgesehen. Beide Verdickungen 8 und 10 sind durch das Aufbringen von Material, hier nämlich durch das Auflaminieren von GFK hergestellt worden. Die vorteilhafte Verdickung kann somit auch Druck- und Zugkräfte aufnehmen und dadurch das Rotorblatt 1, insbesondere im Bereich der Trennstelle 6 verstärken. Die Breite der insgesamt hier aufgetragenen Verdickung 8 beträgt etwa 150cm, wenn die Abschrägung der Verdickung, nämlich des aufgetragene Materials, mitgerechnet wird. Die Verdickung ohne Abschrägung weist eine Breite von etwa 1 Meter auf. Die Blattwandungen 2 bzw. 4 können ihrerseits noch eine leichte Schäftung, also Anschrägung zur Verdickung hin aufweisen, die aber nicht Teil der Verdickung ist.

Die gesamte Verdickung einschließlich der Abschrägung 16 ist zumindestens für den gezeigten Teil des Rotorblatts 1 umlaufend und weist dabei eine konstante Breite auf. Das gilt für den Bereich ohne und auch für den Bereich mit abgeschrägtem Bereich 16.

In der Figur 2, die im Wesentlichen eine Ansicht in das aufgeschnittene Rotorblatt 1 hinein gibt, sind für Verankerungsbolzen Bohrungen 18 und gestreckte Öffnung 20 dargestellt. In den Bohrungen 18 sind äußere Verankerungsstifte 24 und in den gestreckten Öffnungen 20 sind innere Verankerungsstifte 22 angeordnet. Es könnte auch umgekehrt sein.

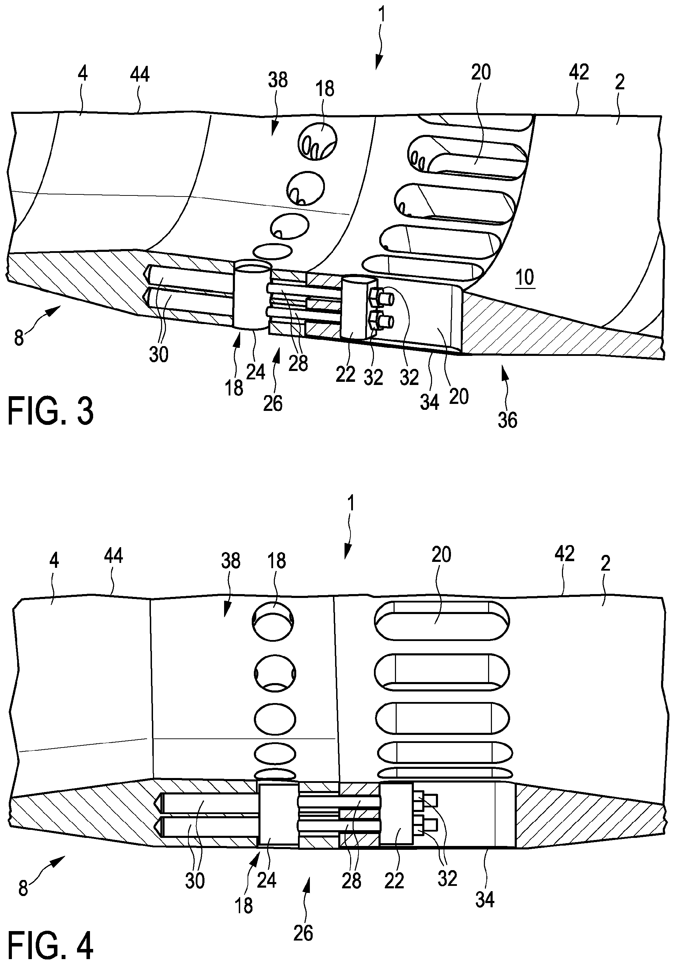

Figur 3 und Figur 4 zeigen Details der Verbindung, insbesondere beispielhaft ein Befestigungspaar 26 mit einem inneren Verankerungsstift 22, der in einer Bohrung 18 angeordnet ist, und einem äußeren Verankerungsstift 24, der in einer gestreckten Öffnung 20 angeordnet ist. Die veranschaulichende Darstellung der Figuren 3 und 4 zeigt in dem Ausschnitt noch weitere Bohrungen 18 und gestreckte Öffnungen 20, aber ohne weitere Befestigungspaare 26, was aber nur der Veranschaulichung dient. In einem zusammengesetzten Rotorblatt 1 sind vorzugsweise sämtliche Bohrungen 18 und gestreckten Öffnungen 20 mit Befestigungspaaren 26 bestückt.

Das gezeigte Befestigungspaar 26 weist zudem zwei Gewindestangen 28 auf, die auch als Dehnbolzen oder Dehngewindebolzen bezeichnet werden können. Jedenfalls werden hier vorzugsweise dehnbare Gewindestangen vorgeschlagen, die die Funktion von Dehnhülsen noch unterstützen können.

Entsprechend sind auch Dehnhülsen 30 an einem Ende der Gewindestangen 28 angeordnet. Außerdem weist jede Gewindestange 28 ein Spannmittel 32 auf. Ein Verspannen erfolgt nun so, dass die Spannmittel 32 auf ihren Gewindestangen 28 angezogen werden, wodurch die Gewindestange 28 im Grunde gemäß der Darstellung der Figuren 3 und 4 die jeweilige Dehnhülse 30 gegen den äußeren Verankerungsbolzen 24 zieht. Die beiden Verankerungsstifte werden dadurch aufeinander zugezogen und außerdem wird die jeweilige Dehnhülse 30 vorgespannt.

Dazu kann der innere Verankerungsstift 22 und mit ihm die Spannmittel 32 durch die gestreckte Öffnung 20 erreicht werden und es kann im zusammengesetzten Zustand die Verbindung festgezogen und somit für die Spannhülsen eine Vorspannung erreicht werden. Ein Herausnehmen der Gewindestangen 28 ist dennoch nicht möglich. Die Figur 3 zeigt auch, dass die langgestreckte Öffnung 20 durch einen Verschluss 34 nach außen zur äußeren Oberfläche 36 des Rotorblatts 1 hin verschlossen ist. Die Befestigungsmittel, also insbesondere Elemente des Befestigungspaares sind somit vor Witterungseinflüssen, zumindest Niederschlägen geschützt.

Die beiden Figuren 3 und 4 verdeutlichen auch die Verdickung 8 bzw. äußere Verdickung 8 und die innere Verdickung 10, wobei Materialschichten hier nicht gezeigt sind. Es ist auch zu erkennen, dass der Bereich konstanter Dicke 38 der Verdickungen 8 und 10 und Befestigungspaare 26 aufeinander abgestimmt sind. Es ist auch zu erkennen, dass sowohl der Bereich konstanter Verdickung 38, als auch die Verdickung 8 eine klare Grenze aufweisen und eine umlaufend oder teilweise umlaufend konstante Breite haben.

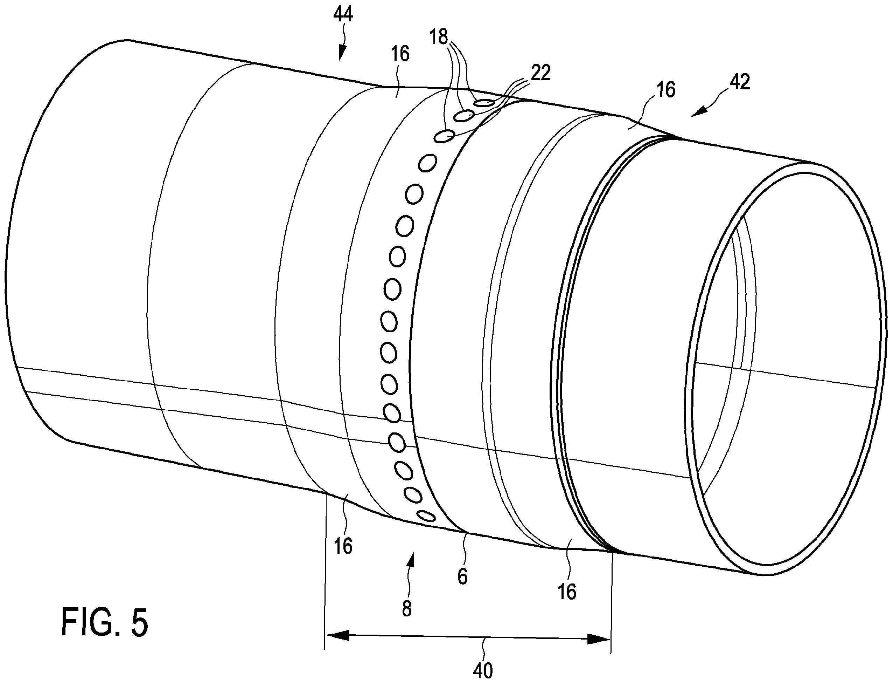

Figur 5 zeigt in einem Ausschnitt einen zusammengesetzten inneren Kern 42 und äußeren Kern 44. Teile dieses inneren und äußeren Kerns 42, 44 bilden auch unmittelbar die Rotorblattoberfläche und damit das Rotorblatt unmittelbar. Insoweit sind die Ausschnitte des Rotorblattinnenteils 2 und des Rotorblattaußenteils 4 der Figuren 3 und 4 identisch mit dem inneren bzw. äußeren Kern 42, 44.

In Figur 5 ist insoweit ebenfalls vieles von dem zu sehen, was die Figuren 3 und 4 zeigen, allerdings in einer Außenansicht. Besonders ist die Verdickung 8 zu sehen und darin die Bohrungen 18 mit den darin enthaltenen inneren Verankerungsstiften 22. Die in den Figuren 3 und 4 gezeigten gestreckten Öffnungen 20 sind wegen ihrer Abdeckung 34 in der Figur 5 nicht zu erkennen. Die Abdeckung 34 ist so in die Oberfläche eingepasst, dass sie in Figur 5 nicht dargestellt sind. Schließlich ist auch die Trennstelle 6 in Figur 5 zu erkennen und Figur 5 macht auch deutlich, dass die Verdickung 8 einen umlaufenden Bereich für diese zusammengesetzten inneren und äußeren Kern bilden. Dabei hat die Verdickung 8 eine konstante Breite 40.

Mit der gezeigten Erfindung ist ein sehr effizienter Rotor erzielbar. Damit kann eine Windenergieanlage mit 3MW Nennleistung realisiert werden, die für eine Windklasse II nach IEC mit einem Rotor auskommt, der nur einen Rotordurchmesser von 115,7m aufweist. Dennoch kann die Anlage mit höherer Leistung betrieben werden, z.B. mit 3,5 MW.

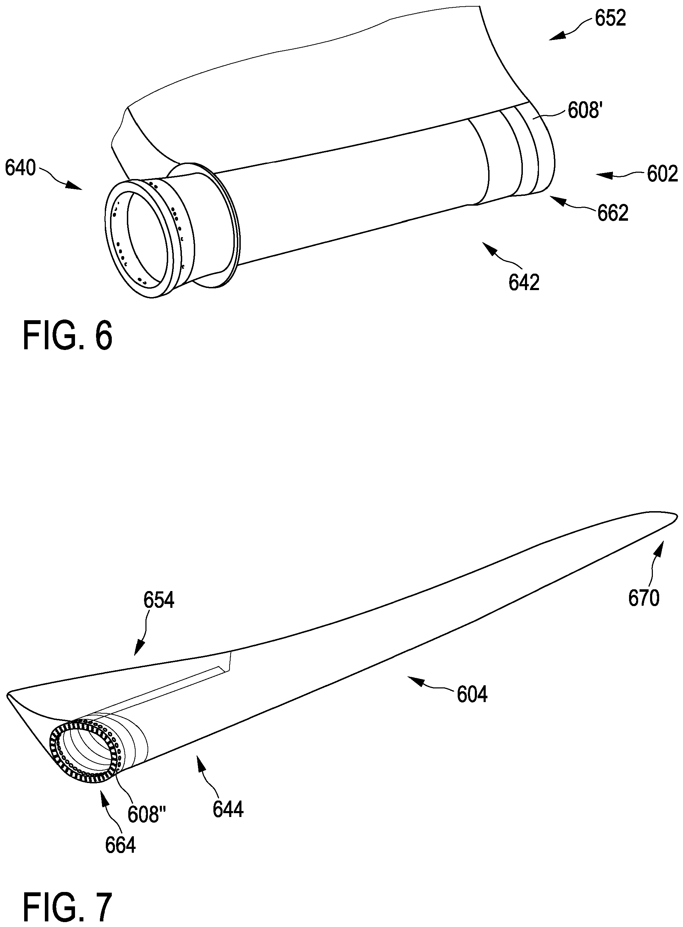

Das Rotorblattinnenteil 602 der Figur 6 umfasst einen inneren Kern 642 und einen inneren Hinterkantenkasten 652. Der innere Kern 642 umfasst einen Wurzelbereich 640 zum Befestigen an einer Rotornabe, und einen inneren Befestigungsbereich 662 zum Befestigen an einem äußeren Befestigungsbereich 664 eines Rotorblattaußenteils 604, wie es in Figur 7 dargestellt ist. Das Rotorblattaußenteil 604 weist einen äußeren Kern 644 auf, an dem ein äußerer Hinterkantenkasten 654 angeordnet und befestigt ist. Im zusammengesetzten Zustand des Rotorblattinnenteils 602 mit dem Rotorblattaußenteil 604 gemäß den Figuren 6 und 7 werden der innere Hinterkantenkasten 652 und der äußere Hinterkantenkasten 654 so zusammengesetzt, dass sie funktional eine Einheit bilden. Gegebenenfalls kann ein etwaiger Zwischenraum oder Verbindungsspalt zwischen diesen beiden Elementen hingenommen werden oder auf einfache Art und Weise abgedeckt werden. Die tragende Befestigung des Rotorblattinnenteils 602 und des Rotorblattaußenteils 604 untereinander bzw. die Befestigung des Rotorblattaußenteils 604 an dem Rotorblattinnenteil 602 erfolgt über den inneren und äußeren Befestigungsbereich 662 und 664.

Bei dem Rotorblattaußenteil 604 kann der äußere Kern 644 sich von dem äußeren Befestigungsbereich 664 zu einer Blattspitze 670 hin verjüngen und seine ovale Form dabei aufgeben. Der äußere Kern 644 und der äußere Hinterkantenkasten 654 können dabei ineinander übergehen. Etwaige Erläuterungen zu einer ovalen Form des äußeren Kerns 644 beziehen sich insoweit auf den Bereich des äußeren Befestigungsbereichs 664, was nicht nur diese Ausführungsform, sondern jegliche ovalen äußeren Kerne betrifft. Die Figuren 6 und 7 zeigen auch eine Verdickung 608' bzw. 608", die zusammen eine gemeinsame Verdickung bilden, wenn das Rotorblattaußenteil 604 und das Rotorblattinnenteil 602 zusammengesetzt sind.

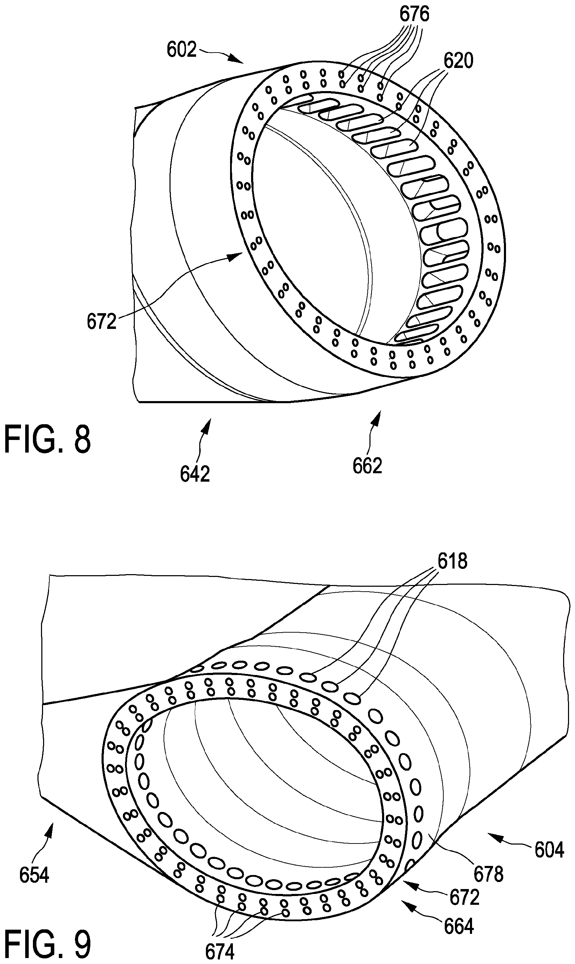

Die Figuren 8 und 9 zeigen in einer Vergrößerung den inneren Befestigungsbereich 662 bzw. den äußeren Befestigungsbereich 664. Die Figur 9 zeigt dazu im Ansatz noch einen Teil des äußeren Hinterkantenkastens 654, wobei das Pendent dazu am inneren Kern 642 in der Figur 8 der besseren Übersichtlichkeit halber weggelassen wurde.

Den Figuren 8 und 9 ist zu entnehmen, dass für eine Verbindung der beiden Befestigungsbereiche 662 und 664 eine doppelreihige Bolzenverbindung vorgesehen ist. Jeweils ein Referenz-Bohrungspaar 672 ist in beiden Figuren dargestellt, also für beide Befestigungsbereiche 662 und 664 dargestellt. Diese beiden Referenz-Bohrungspaare werden dann bestimmungsgemäß beim Verbinden der beiden Befestigungsbereiche 662 und 664 aneinander zu liegen kommen.

Für eine Verbindung wird in jede Bohrung 618 bzw. Querbohrung 618 ein nicht näher gezeigter äußerer Verankerungsstift eingesetzt. Durch die Längsbohrungen 674 kann jeweils ein nicht näher gezeigter Verbindungsbolzen, der auch als Gewindestange bezeichnet werden kann, bis zu der entsprechenden Querbohrung 618 und dort durch den entsprechenden äußeren Verankerungsstift geschoben werden. Er kann weiter durch eine Dehnhülse und dann in eine Befestigungsmutter o.dgl. eingesetzt und eingeschraubt werden, wie sich im Grunde aus der Querschnittdarstellung der Figuren 3 und 4 ergibt. Jede Querbohrung 618 bzw. jeder äußere Verankerungsstift umfasst dann ein Verbindungsbolzenpaar. Mit dieser Vorbereitung können dann der äußere Befestigungsbereich 664 und der innere Befestigungsbereich 662 aneinandergesetzt werden, so dass die Verbindungsbolzen in die inneren Längsbohrungen 676 geschoben werden. Eine Verschraubung, insbesondere optimale Verschraubung kann dann in den dargestellten Langlöchern 620 vorgenommen werden. Hierdurch können dann die beiden Blattteile, nämlich das Rotorblattinnenteil 602 und das Rotorblattaußenteil 604 verbunden werden. In den Langlöchern 620 können dann die nun so eingeführten Verbindungsbolzen fest verschraubt werden, wie es im Grunde auch in den Figuren 3 und 4 verdeutlicht ist.

Die Langlöcher 620 sind nach außen hin verschlossen und nur vom Blattinnenraum bzw. vom Innenraum des inneren Kerns 642 zugänglich. Die Querbohrungen 618 sind jeweils durchgängig und können von außen mit einer Abdeckung 678 abgedeckt werden, die ansatzweise in Figur 9 veranschaulicht ist.

## Patentansprüche

1. Rotorblatt (1) einer Windenergieanlage (100) mit einer Blattwurzel zur Befestigung an einer Rotornabe, einer zur Blattwurzel abgewandten Blattspitze und mit einer von der Blattwurzel zur Blattspitze verlaufenden Rotorblattlängsachse, umfassend
- ein zur Blattnabe gewandtes, insbesondere die Blattwurzel umfassendes Rotorblattinnenteil (2) und
- ein der Blattnabe abgewandtes, insbesondere die Blattspitze umfassendes Rotorblattaußenteil (4), wobei
das Rotorblattinnenteil (2) und das Rotorblattaußenteil (4) in einem Verbindungsbereich miteinander verbunden sind und der Verbindungsbereich in dem Rotorblatt (1) eine Verdickung (8) bildet,
wobei zur Befestigung des Rotorblattinnenteils (2) an dem Rotorblattaußenteil (4) eine äußere und eine innere Reihe Gewindestangen (28) vorgesehen sind, wobei die Gewindestangen (28) im Wesentlichen parallel zueinander verlaufen und die äußere Reihe näher zur Blattoberfläche und die innere zum Blattinnenraum hin angeordnet ist,
**dadurch gekennzeichnet, dass** einige oder alle Gewindestangen der äußeren Reihe eine Neigung gegenüber der äußeren Blattoberfläche im Bereich 0,5°-5° aufweisen.

2. Rotorblatt (1) nach Anspruch 1,
**dadurch gekennzeichnet, dass**
die Verdickung (8) als außen, quer zur Rotorblattlängsachse umlaufender, oder zumindest von der Druckseite zur Saugseite verlaufender Steg ausgebildet ist, insbesondere mit einem angeschrägten Bereich zu beiden Seiten.

3. Rotorblatt (1) nach Anspruch 1 oder 2,
**dadurch gekennzeichnet, dass**
sich die Verdickung (8) um wenigstens 1 cm, insbesondere um wenigstens 2cm über die Blattoberfläche erhebt, und/oder wenigstens eine Verdickung (8) des Rotorblattes (1) um wenigstens 1%, insbesondere wenigstens um 2% bezogen auf die Profiltiefe oder Sehnenlänge im Verbindungsbereich bildet und/oder eine konstante Breite von 100cm bis 200 cm, insbesondere etwa 1,5 Meter aufweist.

4. Rotorblatt nach einem der vorstehenden Ansprüche,
**dadurch gekennzeichnet, dass**
- sich das Rotorblattaußenteil zusammensetzt aus äußerem Kern und äußerem Hinterkantenkasten und dass
- sich das Rotorblattinnenteil zusammensetzt aus innerem Kern und innerem Hinterkantenkasten und dass
- das Rotorblattaußenteil und das Rotorblattinnenteil im Bereich des äußeren und inneren Kerns zusammengesetzt sind und/oder dass
- das Rotorblattaußenteil und das Rotorblattinnenteil im Bereich des äußeren und inneren Kerns die Verdickung aufweist und/oder dass
- die Verdickung von der dem äußeren und inneren Kern zum äußeren bzw. inneren Hinterkantenkasten verläuft.

5. Rotorblatt (1) nach einem der vorstehenden Ansprüche,
**dadurch gekennzeichnet, dass**
in dem Bereich der Verdickung Befestigungsmittel einlaminiert sind und/oder dass ein bzw. der innere und äußere Kern jeweils als gewickelter Kern ausgebildet sind und/oder im Querschnitt eine ovale Form aufweisen, die vorzugsweise ein Verhältnis vom kleinsten zum größten Durchmesser des Ovals von 1:1,2 bis 1:2 aufweist, vorzugsweise von 1:1,4 bis 1:1,7, insbesondere ein Verhältnis von etwa 1:1,5 aufweist.

6. Rotorblatt (1) nach einem der vorstehenden Ansprüche,
**dadurch gekennzeichnet, dass**
das Rotorblattinnenteil (2) und das Rotorblattaußenteil (4) im Wesentlichen aus faserverstärktem Kunststoff, insbesondere GFK oder CFK gefertigt sind und dass die Verdickungen (8,10) durch aufgetragenes Material, insbesondere auflaminierten GFK oder CFK hergestellt ist, und/oder
zwischen dem Rotorblattinnenteil (2) und dem Rotorblattaußenteil (4) eine Sperrplatte oder Sperrscheibe angeordnet ist, die nach außen über die Verdickung (8) hinausragt.

7. Rotorblatt (1) nach Anspruch 1,
**dadurch gekennzeichnet, dass**
- jeweils eine Gewindestange (28) der inneren Reihe und eine der äußeren Reihe zusammen ein Gewindestangenpaar bildet und Teil eines Befestigungspaares ist und
- ein Gewindestangenpaar jeweils einen gemeinsamen quer zu den Gewindestangen (28) verlaufenden inneren in dem Rotorblattinnenteil verankerten Verankerungsstift und einen gemeinsamen quer zu den Gewindestangen verlaufenden äußeren in dem Rotorblattaußenteil verankerten Verankerungsstift verwendet, die insbesondere Teil des Befestigungspaares sind, wobei
- das Gewindestangenpaar den inneren und den äußeren Verankerungsstift gegeneinander zieht, um dadurch das Rotorblattinnenteil und das Rotorblattaußenteil gegeneinander zu ziehen.

8. Rotorblatt (1) nach Anspruch 7,
**dadurch gekennzeichnet, dass**
einer des inneren und äußeren Verankerungsstifts (22, 24) jedes Befestigungspaares (26) in einer Bohrung quer zur Rotorblattlängsachse angeordnet ist und dass der andere in einer in Richtung der Rotorblattlängsachse getreckten Öffnung (20), insbesondere einem Langloch, angeordnet ist, so dass neben dem Verankerungsstift zu jedem der beiden Gewindestangen ein Spannmittel, insbesondere Spannmutter angeordnet ist und vom Rotorblatt von innen betätigt werden kann.

9. Rotorblatt (1) nach einem der vorstehenden Ansprüche,
**dadurch gekennzeichnet, dass**
eine Gewindestangenreihe bzw. die äußere Gewindestangenreihe in einem Bereich unter der Verdickung (8) angeordnet ist.

10. Rotorblatt (1) nach einem der vorstehenden Ansprüche,
**dadurch gekennzeichnet, dass**
ein bzw. das Befestigungspaar einen inneren Verankerungsstift, einen äußeren Verankerungsstift, und zwei Gewindestangen mit jeweils einer Dehnhülse und einem Spannmittel, insbesondere Spannmutter umfasst, wobei die beiden Verankerungsstifte vorzugsweise zwischen den Dehnhülsen einerseits und den Spannmitteln andererseits angeordnet sind, und/oder
eine bzw. die Gewindestange (28) im zusammengesetzten Zustand des Rotorblattes nicht entnommen, aber gespannt werden kann, insbesondere, dass die Gewindestangen (28) wenigstens eine Länge von 40 cm aufweisen, insbesondere etwa 80cm.

11. Windenergieanlage mit wenigstens einem Rotorblatt (1) gemäß einem der Ansprüche 1 bis 10.

12. Verfahren zum Herstellen eines Rotorblattes (1) einer Windenergieanlage gemäß einem der Ansprüche 1 bis 10 umfassend
- Herstellen eines Rotorblattinnenteils und eines Rotorblattaußenteils, einschließlich eines Verbindungsbereichs mit einer Verdickung und
- Verbinden des Rotorblattinnenteils mit dem Rotorblattaußenteil an einem Errichtungsort einer Windenergieanlage, und
- Befestigen des Rotorblattinnenteils an dem Rotorblattaußenteil über eine äußere und eine innere Reihe Gewindestangen (28), wobei die Gewindestangen im Wesentlichen parallel zueinander verlaufen und die äußere Reihe näher zur Blattoberfläche und die innere zum Blattinnenraum hin angeordnet ist, wobei einige oder alle Gewindestangen der äußeren Reihe eine Neigung gegenüber der äußeren Blattoberfläche im Bereich 0,5°-5° aufweisen.

13. Verfahren nach Anspruch 12,
**dadurch gekennzeichnet, dass**
vordem Zusammensetzen des Rotorblattinnenteils mit dem Rotorblattaußenteil, Gewindestangen (28) zum Verbinden in eines der beiden Rotorblattteile eingesetzt wird, insbesondere zusammen mit jeweils einer Dehnhülse (30) eingesetzt wird.

## Claims

1. Rotor blade (1) of a wind turbine (100), with a blade root for fastening to a rotor hub, a blade tip which is averted from the rotor hub, and a rotor blade longitudinal axis which extends from the blade root to the blade tip, comprising
- a rotor blade inner part (2) which faces the blade hub and comprises in particular the blade root, and
- a rotor blade outer part (4) which is averted from the blade hub and comprises in particular the blade tip, wherein
the rotor blade inner part (2) and the rotor blade outer part (4) are connected to each other in a connecting region and the connecting region forms a thickened portion (8) in the rotor blade (1),
wherein an outer and an inner row of threaded rods (28) is provided to fasten the rotor blade inner part (2) to the rotor blade outer part (4), wherein the threaded rods (28) extend essentially parallel to one another and the outer row is arranged closer to the blade surface and the inner row towards the blade interior,
**characterized in that** some threaded rods or all of the threaded rods of the outer row have an inclination relative to the outer blade surface in the region of 0,5°-5°.

2. Rotor blade (1) according to Claim 1,
**characterized in that** the thickened portion (8) is designed as a web which extends on the outside around the periphery transversely to the longitudinal axis of the rotor blade, or at least extends from the high-pressure side to the low-pressure side, in particular with a bevelled region on both sides.

3. Rotor blade (1) according to claims 1 or 2,
**characterized in that**
the thickened portion (8) is raised by at least 1cm, in particular by at least 2cm, above the blade surface, and/or forms at least one thickened portion (8) of the rotor blade (1) which is thickened by at least 1%, in particular by at least 2%, relative to the profile depth or chord length in the connecting region, and/or has a constant width of 100cm to 200cm, in particular approximately 1.5 metres.

4. Rotor blade according to one of the preceding claims,
**characterized in that**
- the rotor blade outer part is composed of the outer core and the outer trailing edge box, and **in that**
- the rotor blade inner part is composed of the inner core and the inner trailing edge box, and **in that**
- the rotor blade outer part and the rotor blade inner part are assembled in the region of the outer and inner core, and/or **in that**
- the rotor blade outer part and the rotor blade inner part have the thickened portion in the region of the outer and inner core, and/or **in that**
- the thickened portion extends from the outer and inner core to the outer and inner trailing edge box.

5. Rotor blade (1) according to one of the preceding claims,
**characterized in that**,
in the region of the thickened portion, fastening means are enclosed in laminated and/or **in that** a core, or the inner and outer core, is/are each designed as a wound core and/or has/have an oval shape in cross-section which preferably has a ratio of the smallest diameter to the largest diameter of 1:1.2 to 1:2, preferably of 1:1.4 to 1:1.7, in particular a ratio of approximately 1 :1.5.

6. Rotor blade (1) according to one of the preceding claims,
**characterized in that**
the rotor blade inner part (2) and the rotor blade outer part (4) are manufactured essentially from fibre-reinforced plastic, in particular GFRP or CFRP, and **in that** the thickened portions (8, 10) are produced from applied material, in particular laminated-on GFRP or CFRP, and/or
a blocking plate or blocking disc is arranged between the rotor blade inner part (2) and the rotor blade outer part (4) which projects outwards beyond the thickened portion (8).

7. Rotor blade (1) according to Claim 1,
**characterized in that**
- in each case one threaded rod (28) of the inner row and one of the outer row together form a pair of threaded rods and is part of a fastening pair, and
- a pair of threaded rods in each case uses a common inner anchoring pin which extends transversely to the threaded rods (28) and is anchored in the rotor blade inner part, and a common outer anchoring pin which extends transversely to the threaded rods and is anchored in the rotor blade outer part, which are in particular part of the fastening pair, wherein
- the pair of threaded rods pulls the inner and the outer anchoring pin against each other in order thereby to pull the rotor blade inner part and the rotor blade outer part against each other.

8. Rotor blade (1) according to Claim 7,
**characterized in that**
one of the inner and outer anchoring pin (22, 24) of each fastening pair (26) is arranged in a bore transverse to the rotor blade longitudinal axis, and **in that** the other is arranged in an opening (20) which is elongated in the direction of the rotor blade longitudinal axis, in particular a slot, so that a clamping means, in particular a clamping nut, is arranged next to the anchoring pin for each of the two threaded rods, and can be activated from inside the rotor blade.

9. Rotor blade (1) according to one of the preceding claims,
**characterized in that**
one row of threaded rods or the outer row of threaded rods is arranged in a region below the thickened portion (8).

10. Rotor blade (1) according to one of the preceding claims,
**characterized in that**
one or the fastening pair comprises an inner anchoring pin, an outer anchoring pin, and two threaded rods each with an expansion sleeve and a clamping means, in particular a clamping nut, wherein the two anchoring pins are preferably arranged between the expansion sleeves, on the one hand, and the clamping means, on the other hand, and/or
one or the threaded rod (28) cannot be removed in the assembled state of the rotor blade but can be clamped, in particular **in that** the threaded rods (28) have a length of at least 40cm, in particular approximately 80cm.

11. Wind turbine with at least one rotor blade (1) according to one of Claims 1 to 10.

12. Method for producing a rotor blade (1) of a wind turbine according to one of Claims 1 to 10, comprising
- producing a rotor blade inner part and a rotor blade outer part, including a connecting region with a thickened portion, and
- connecting the rotor blade inner part to the rotor blade outer part at an erection site of a wind turbine, and
- attaching the rotor blade inner part to the rotor blade outer part via an outer and an inner row of threaded rods (28), wherein the threaded rods (28) extend essentially parallel to one another and the outer row is arranged closer to the blade surface and the inner row towards the blade interior,
wherein some or all of the threaded rods of the outer row have an inclination relative to the outer blade surface in the range of 0,5°-5°.

13. Method according to Claim 12, **characterized in that**, before the rotor blade inner part is assembled with the rotor blade outer part, threaded rods (28) are used for connection in one of the two rotor blade parts, in particular are used together with in each case an expansion sleeve (30).

## Revendications

1. Pale de rotor (1) d'une éolienne (100) avec un pied de pale pour la fixation à un moyeu de rotor, un bout de pale éloigné du pied de pale et avec un axe longitudinal de pale de rotor s'étendant du pied de pale au bout de pale, comprenant :
- une partie intérieure de pale de rotor (2) tournée vers le moyeu de pale, en particulier comprenant le pied de pale et
- une partie extérieure de pale de rotor (4) éloignée du moyeu de pale, en particulier comprenant le bout de pale, dans laquelle
la partie intérieure de pale de rotor (2) et la partie extérieure de pale de rotor (4) sont reliées entre elles dans une zone de liaison et la zone de liaison forme un épaississement (8) dans la pale de rotor (1),
dans laquelle pour la fixation de la partie intérieure de pale de rotor (2) à la partie extérieure de pale de rotor (4) une rangée extérieure et une rangée intérieure de tiges filetées (28) sont prévues, dans laquelle les tiges filetées (28) s'étendent sensiblement parallèlement les unes aux autres et la rangée extérieure est agencée plus près de la surface de pale et la rangée intérieure vers l'espace intérieur de pale,
**caractérisée en ce que** plusieurs ou toutes les tiges filetées de la rangée extérieure présentent une inclinaison par rapport à la surface de pale extérieure dans la plage de 0,5° à 5°.

2. Pale de rotor (1) selon la revendication 1,
**caractérisée en ce que**
l'épaississement (8) est réalisé comme traverse extérieure, tournant transversalement à l'axe longitudinal de pale de rotor, ou s'étendant au moins de l'intrados à l'extrados, en particulier avec une zone biseautée des deux côtés.

3. Pale de rotor (1) selon la revendication 1 ou 2,
**caractérisée en ce que**
l'épaississement (8) s'élève d'au moins 1 cm, en particulier d'au moins 2 cm au-dessus de la surface de pale, et/ou forme au moins un épaississement (8) de la pale de rotor (1) d'au moins 1 %, en particulier d'au moins 2 % par rapport à la profondeur de profilé ou la longueur de corde dans la zone de liaison et/ou présente une largeur constante de 100 cm à 200 cm, en particulier d'environ 1,5 mètre.

4. Pale de rotor selon l'une des revendications précédentes,
**caractérisée en ce que**
- la partie extérieure de pale de rotor se compose d'une âme extérieure et d'une caisse de bord de fuite extérieure et que
- la partie intérieure de pale de rotor se compose d'une âme intérieure et d'une caisse de bord de fuite intérieure et que
- la partie extérieure de pale de rotor et la partie intérieure de pale de rotor sont assemblées dans la zone de l'âme extérieure et intérieure et/ou que
- la partie extérieure de pale de rotor et la partie intérieure de pale de rotor présentent l'épaississement dans la zone de l'âme extérieure et intérieure et/ou que
- l'épaississement s'étend de l'âme extérieure et intérieure à la caisse de bord de fuite extérieure ou intérieure.

5. Pale de rotor (1) selon l'une des revendications précédentes,
**caractérisée en ce que**
dans la zone de l'épaississement, des moyens de fixation sont laminés et/ou qu'une ou l'âme intérieure et extérieure sont réalisées respectivement comme âme enroulée et/ou en section transversale présentent une forme ovale qui présente de préférence un rapport du plus petit au plus grand diamètre de l'ovale de 1:1,2 à 1:2, de préférence de 1:1,4 à 1:1,7, en particulier un rapport d'environ 1:1,5.

6. Pale de rotor (1) selon l'une des revendications précédentes,
**caractérisée en ce que**
la partie intérieure de pale de rotor (2) et la partie extérieure de pale de rotor (4) sont fabriquées sensiblement en matière plastique renforcée par des fibres, en particulier GFK ou CFK et que les épaississements (8, 10) sont fabriqués par un matériau appliqué, en particulier GFK ou CFK laminé, et/ou
une plaque de verrouillage ou un disque de verrouillage est agencé(e) entre la partie intérieure de pale de rotor (2) et la partie extérieure de pale de rotor (4), qui dépasse vers l'extérieur au-delà de l'épaississement (8).

7. Pale de rotor (1) selon la revendication 1,
**caractérisée en ce que**
- respectivement une tige filetée (28) de la rangée intérieure et une de la rangée extérieure forment ensemble une paire de tiges filetées et font partie d'une paire de fixation et
- une paire de tiges filetées utilise respectivement une broche d'ancrage intérieure commune s'étendant transversalement aux tiges filetées (28) ancrée dans la partie intérieure de pale de rotor et une broche d'ancrage extérieure commune s'étendant transversalement aux tiges filetées ancrée dans la partie extérieure de pale de rotor qui font en particulier partie de la paire de fixation, dans laquelle
- la paire de tiges filetées tire la broche d'ancrage intérieure et la broche d'ancrage extérieure l'une contre l'autre afin de tirer ainsi la partie intérieure de pale de rotor et la partie extérieure de pale de rotor l'une contre l'autre.

8. Pale de rotor (1) selon la revendication 7,
**caractérisée en ce que**
une de la broche d'ancrage intérieure et extérieure (22, 24) de chaque paire de fixation (26) est agencée dans un perçage transversalement à l'axe longitudinal de pale de rotor et que l'autre est agencée dans une ouverture (20) étirée en direction de l'axe longitudinal de pale de rotor, en particulier un trou oblong de sorte qu'à côté de la broche d'ancrage pour chacune des deux tiges filetées un moyen de serrage, en particulier un écrou de serrage, est agencé et peut être actionné par la pale de rotor de l'intérieur.

9. Pale de rotor (1) selon l'une des revendications précédentes,
**caractérisée en ce que**
une rangée de tiges filetées ou la rangée de tiges filetées extérieure est agencée dans une zone sous l'épaississement (8).

10. Pale de rotor (1) selon l'une des revendications précédentes,
**caractérisée en ce que**
une ou la paire de fixation comporte une broche d'ancrage intérieure, une broche d'ancrage extérieure, et deux tiges filetées avec respectivement une douille élastique et un moyen de serrage, en particulier un écrou de serrage, dans laquelle les deux broches d'ancrage sont agencées de préférence entre les douilles élastiques d'une part et les moyens de serrage d'autre part, et/ou
une ou la tige filetée (28) ne peut être retirée mais peut être serrée dans l'état assemblé de la pale de rotor, en particulier que les tiges filetées (28) présentent au moins une longueur de 40 cm, en particulier d'environ 80 cm.

11. Éolienne avec au moins une pale de rotor (1) selon l'une des revendications 1 à 10.

12. Procédé de fabrication d'une pale de rotor (1) d'une éolienne selon l'une des revendications 1 à 10 comprenant
- la fabrication d'une partie intérieure de pale de rotor et d'une partie extérieure de pale de rotor, y compris d'une zone de liaison avec un épaississement et
- la liaison de la partie intérieure de pale de rotor avec la partie extérieure de pale de rotor sur un lieu d'installation d'une éolienne, et
- la fixation de la partie intérieure de pale de rotor à la partie extérieure de pale de rotor par une rangée extérieure de tiges filetées et une rangée intérieure de tiges filetées (28), dans lequel les tiges filetées s'étendent sensiblement parallèlement les unes aux autres et la rangée extérieure est agencée plus près de la surface de pale et la rangée intérieure vers l'espace intérieure de pale, dans lequel plusieurs ou toutes les tiges filetées de la rangée extérieure présentent une inclinaison par rapport à la surface de pale extérieure dans la plage de 0,5° à 5°.

13. Procédé selon la revendication 12,
**caractérisé en ce que**,
avant l'assemblage de la partie intérieure de pale de rotor avec la partie extérieure de pale de rotor, des tiges filetées (28) sont insérées pour la liaison dans une des deux parties de pale de rotor, en particulier sont insérées conjointement avec respectivement une douille élastique (30).
